# EUROPEAN PATENT APPLICATION

(11) **EP 4 447 568 A1**
(43) Date of publication of application: **16.10.2024**
(21) Application number: 22914512.3
(22) Date of filing: 23.12.2022
(51) Int. Cl.: H04W 56/00, H04J 3/06

(54) **SYSTEM FRAME NUMBER SYNCHRONIZATION METHOD AND RELATED APPARATUS**

(30) Priority: 31.12.2021 CN 202111679417
(71) Applicant: Huawei Technologies Co., Ltd., Shenzhen, Guangdong 518129 (CN)
(72) Inventor: QIU, Changfeng, Shenzhen, Guangdong 518129 (CN); HUANG, Xing, Shenzhen, Guangdong 518129 (CN); GONG, Yangbo, Shenzhen, Guangdong 518129 (CN)
(74) Representative: Gill Jennings & Every LLP
(86) International application number: PCT/CN2022/141237
(87) International publication number: WO 2023/125258

(57) **Abstract**

Embodiments of this application disclose a system frame number synchronization method, applied to a communication system defined in the enhanced common public radio interface eCPRI protocol. The communication system includes radio equipment control and radio equipment. The method includes: The radio equipment control generates system frame information, where the system frame information indicates a system frame number; and the radio equipment control sends the system frame information to the radio equipment by using a control plane message. A system frame number used by the radio equipment is consistent with the system frame number used by the radio equipment control, to ensure that the radio equipment can successfully parse a data packet from the radio equipment control, avoid service interruption, and improve reliability of the communication system.

## Description

This application claims priority to Chinese Patent Application No. 202111679417.1, filed with the China National Intellectual Property Administration on December 31, 2021 and entitled "SYSTEM FRAME NUMBER SYNCHRONIZATION METHOD AND RELATED APPARATUS", which is incorporated herein by reference in its entirety.

### TECHNICAL FIELD

This application relates to the field of communication technologies, and in particular, to a system frame number synchronization method and a related apparatus.

### BACKGROUND

With development of wireless communication technologies, the common public radio interface (common public radio interface, CPRI) protocol is upgraded to the enhanced common public radio interface (enhanced common public radio interface, eCPRI) protocol, and a synchronization plane is defined in the eCPRI protocol.

Radio equipment control (radio equipment control, REC) and radio equipment (radio equipment, RE) transmit a clock signal on a synchronization plane by using the precision time protocol (precision time protocol, PTP). The clock signal corresponds one-to-one to a system frame number in the REC. The RE obtains the clock signal on the synchronization plane and calculates a system frame number. Theoretically, in the case that the clock signals of the REC and the RE are the same, the system frame number calculated by the RE is the same as the system frame number in the REC. In this way, data transmission and processing are completed between the RE and the REC on the premise that the system frame numbers are aligned.

When a clock signal obtained by the RE on the synchronization plane is inconsistent with a clock signal of the REC, a system frame number calculated by the RE based on the clock signal is inconsistent with a system frame number in the REC. When the system frame numbers are not synchronized, the REC and the RE cannot process data. As a result, service interruption is caused.

### SUMMARY

This application discloses a system frame number synchronization method, applied to a communication system defined in the enhanced common public radio interface eCPRI protocol. According to the method, a system frame number used by radio equipment is consistent with a system frame number used by radio equipment control, to ensure that the radio equipment can successfully parse a data packet from the radio equipment control, avoid service interruption, and improve reliability of the communication system.

According to a first aspect, this application provides a system frame number synchronization method, including:
Radio equipment control generates system frame information, where the system frame information indicates a system frame number; and
the radio equipment control sends the system frame information to radio equipment by using a control plane message.

Specifically, the radio equipment control generates (or determines) the system frame information, where the system frame information indicates the system frame number. For example, the system frame information includes the system frame number. For another example, the system frame information includes a group of sequence numbers (or a group of sequences, a group of other characters, or the like), and there is a correspondence between the group of sequence numbers (or the group of sequences, the group of other characters, or the like) and the system frame number. After receiving the system frame information, the radio equipment may obtain, through parsing, the corresponding system frame number.

After generating the system frame information, the radio equipment control sends the system frame information to the radio equipment by using the control plane message. The control plane message includes but is not limited to a control plane message of the eCPRI protocol or a control plane message of the CPRI protocol.

In this embodiment of this application, the radio equipment control generates the system frame information, where the system frame information indicates the system frame number; and the radio equipment control sends the system frame information to the radio equipment by using the control plane message. Correspondingly, the radio equipment receives the control plane message from the radio equipment control, where the control plane message carries the system frame information, and the system frame information indicates the system frame number; and the radio equipment adjusts a local system frame number based on the system frame information. According to the foregoing method, a system frame number used by the radio equipment is consistent with the system frame number used by the radio equipment control, to ensure that the radio equipment can successfully parse a data packet from the radio equipment control, avoid service interruption, and improve reliability of a communication system.

With reference to the first aspect, in a possible implementation of the first aspect, the system frame information further includes a system hyper frame number, a system subframe number, a slot number, and/or a symbol number.

Specifically, the system frame information may further include the system hyper frame number (hyper frame number, HFN) and/or the symbol number (symbol number). The system hyper frame number is also referred to as a hyper frame number, and the hyper frame number is used for extending a representation capability of the system frame number. Some features require an extremely long paging cycle, and a length of the system frame number cannot satisfy a requirement of the paging cycle. Therefore, a hyper frame number is introduced.

In another possible implementation, the system frame information may further indicate a system hyper frame number, a system subframe number, a slot number, and/or a symbol number. The symbol number is a symbol number in a slot. The slot number may also be referred to as a system slot number. The symbol number may also be referred to as an intra-slot symbol number. For example, the system frame information includes a group of sequence numbers (or a group of sequences, a group of other characters, or the like), and there is a correspondence between the group of sequence numbers (or the group of sequences, the group of other characters, or the like) and the system hyper frame number, the system subframe number, the slot number, and/or the symbol number. After receiving the system frame information, the radio equipment may obtain, through parsing, the corresponding system hyper frame number, system subframe number, slot number, and/or symbol number.

With reference to the first aspect, in a possible implementation of the first aspect, a sending priority of the control plane message carrying the system frame information is higher than that of a user plane packet.

Specifically, in the radio equipment control, the sending priority of the control plane message carrying the system frame information is higher than that of the user plane packet. In other words, in comparison with sending of the user plane packet, the radio equipment control preferentially sends the control plane message carrying the system frame information. This avoids impact caused by an abnormal event such as user plane packet congestion on normal transmission of the control plane message carrying the system frame information. Optionally, in the radio equipment control, the sending priority of the control plane message carrying the system frame information is equal to that of the user plane packet.

With reference to the first aspect, in a possible implementation of the first aspect, the sending priority of the control plane message carrying the system frame information is higher than that of another control plane message.

Specifically, in the radio equipment control, the sending priority of the control plane message carrying the system frame information is higher than that of the another control plane message. In other words, in comparison with sending of the another control plane message, the radio equipment control preferentially sends the control plane message carrying the system frame information. Optionally, in the radio equipment control, the sending priority of the control plane message carrying the system frame information is the highest priority in all control plane messages. Optionally, in the radio equipment control, the sending priority of the control plane message carrying the system frame information is equal to that of the another control plane message.

With reference to the first aspect, in a possible implementation of the first aspect, that the radio equipment control sends the system frame information to radio equipment by using a control plane message includes: The radio equipment control periodically sends the system frame information to the radio equipment by using the control plane message.

The radio equipment control periodically sends the system frame information to the radio equipment by using the control plane message. A granularity of sending the control plane message may have a plurality of choices. For example, the granularity is an orthogonal frequency division multiplexing (orthogonal frequency division multiplexing, OFDM) symbol, a frame, a subframe, or a slot.

For example, the radio equipment control sends the system frame information to the radio equipment by using the control plane message at an interval of one symbol, three symbols, or five symbols. For another example, the radio equipment control sends the system frame information to the radio equipment by using the control plane message at an interval of one frame, three frames, or five frames. For another example, the radio equipment control sends the system frame information to the radio equipment by using the control plane message at an interval of one subframe, three subframes, or five subframes. For another example, the radio equipment control sends the system frame information to the radio equipment by using the control plane message at an interval of one subframe, three subframes, or five subframes. It may be understood that, to avoid service interruption between the radio equipment control and the radio equipment as much as possible, a periodicity at which the radio equipment control sends the system frame information to the radio equipment by using the control plane message may be one frame.

With reference to the first aspect, in a possible implementation of the first aspect, that the radio equipment control sends the system frame information to radio equipment by using a control plane message includes:

The radio equipment sends the control plane message to the radio equipment control through an enhanced common public radio interface eCPRI, where the control plane message carries the system frame information.

According to a second aspect, this application provides a system frame number synchronization method, including:
Radio equipment receives a control plane message from radio equipment control, where the control plane message carries system frame information, and the system frame information indicates a system frame number; and
the radio equipment adjusts a local system frame number based on the system frame information.

Specifically, the radio equipment receives the control plane message from the radio equipment control, where the control plane message carries the system frame information. Then, the radio equipment determines the corresponding system frame number based on the system frame information, and adjusts the local system frame number. The radio equipment stores the local system frame number. When the local system frame number is inconsistent with the system frame number from the radio equipment control, the radio equipment adjusts the local system frame number. An adjusted local system frame number is consistent with the system frame number from the radio equipment control.

Further, adjusting, by the radio equipment based on the adjusted local system frame number, a local environment variable related to the system frame information includes but is not limited to: adjusting a receive window of the radio equipment based on the adjusted system frame number; or processing, based on the adjusted system frame number, a data packet stored in a buffer module.

In this embodiment of this application, the radio equipment control generates the system frame information, where the system frame information indicates the system frame number; and the radio equipment control sends the system frame information to the radio equipment by using the control plane message. Correspondingly, the radio equipment receives the control plane message from the radio equipment control, where the control plane message carries the system frame information, and the system frame information indicates the system frame number; and the radio equipment adjusts the local system frame number based on the system frame information. According to the foregoing method, a system frame number used by the radio equipment is consistent with the system frame number used by the radio equipment control, to ensure that the radio equipment can successfully parse a data packet from the radio equipment control, avoid service interruption, and improve reliability of a communication system.

With reference to the second aspect, in a possible implementation of the second aspect, the system frame information further includes a system hyper frame number or a symbol number, and the method further includes:
The radio equipment adjusts a local system hyper frame number, system subframe number, slot number, and/or symbol number based on the system frame information.

When the system frame information further includes the system hyper frame number, a system subframe number, a slot number, and/or the symbol number, the radio equipment adjusts the local system hyper frame number, the system subframe number, the slot number, and/or the symbol number based on the system frame information, so that an adjusted local system hyper frame number, system subframe number, slot number, and/or symbol number are consistent with the system hyper frame number, the system subframe number, the slot number, and/or the symbol number from the radio equipment control. In other words, the radio equipment adjusts the local system frame information based on the system frame information from the radio equipment control.

With reference to the second aspect, in a possible implementation of the second aspect, that radio equipment receives a control plane message from radio equipment control includes:
The radio equipment receives, from the radio equipment control, N control plane messages that carry the system frame information, where N is an integer greater than 1; and
that the radio equipment adjusts a local system frame number based on the system frame information includes:
   the radio equipment determines N to-be-adjusted system frame number differences based on the system frame information carried in the N control plane messages and the local system frame number of the radio equipment; and
   when variations of adjacent system frame number differences in the N to-be-adjusted system frame number differences are consistent, the radio equipment adjusts the local system frame number based on the N to-be-adjusted system frame number differences.

Specifically, the radio equipment control sends, to the radio equipment, the N control plane messages that carry the system frame information, where N is an integer greater than 1. For example, the radio equipment control periodically sends, to the radio equipment, the N control plane messages that carry the system frame information. For another example, the radio equipment control sends, to the radio equipment based on an actual service requirement, the N control plane messages that carry the system frame information.

In a process in which the radio equipment receives the N control plane messages that carry the system frame information, each time the radio equipment receives one control plane message carrying the system frame information, the radio equipment determines, based on the system frame information carried in the control plane message and the local system frame number of the radio equipment, a system frame number difference to be adjusted this time. By analogy, the radio equipment determines, based on the system frame information carried in the N control plane messages and the local system frame number of the radio equipment, the N to-be-adjusted system frame number differences.

It may be understood that, when the system frame information further includes the system hyper frame number, the system subframe number, the slot number, and/or the symbol number, the radio equipment determines, based on the system frame information carried in the N control plane messages and the local system hyper frame number, system subframe number, slot number, and/or symbol number of the radio equipment, N to-be-adjusted system hyper frame number differences, system subframe number differences, slot number differences, and/or symbol number differences.

When the variations of the adjacent system frame number differences in the N to-be-adjusted system frame number differences are consistent, the radio equipment adjusts the local system frame number based on the system frame information carried in the N control plane messages.

According to the foregoing method, on the premise that system frame information of the radio equipment control and the radio equipment is synchronized, the radio equipment is prevented from frequently adjusting local system frame information, to reduce an operation burden of the radio equipment.

With reference to the second aspect, in a possible implementation of the second aspect, a sending priority of the control plane message carrying the system frame information is higher than that of a user plane packet.

Specifically, in the radio equipment control, the sending priority of the control plane message carrying the system frame information is higher than that of the user plane packet. In other words, in comparison with sending of the user plane packet, the radio equipment control preferentially sends the control plane message carrying the system frame information. This avoids impact caused by an abnormal event such as user plane packet congestion on normal transmission of the control plane message carrying the system frame information. Optionally, in the radio equipment control, the sending priority of the control plane message carrying the system frame information is equal to that of the user plane packet.

With reference to the second aspect, in a possible implementation of the second aspect, the sending priority of the control plane message carrying the system frame information is higher than that of another control plane message.

Specifically, in the radio equipment control, the sending priority of the control plane message carrying the system frame information is higher than that of the another control plane message. In other words, in comparison with sending of the another control plane message, the radio equipment control preferentially sends the control plane message carrying the system frame information. Optionally, in the radio equipment control, the sending priority of the control plane message carrying the system frame information is the highest priority in all control plane messages. Optionally, in the radio equipment control, the sending priority of the control plane message carrying the system frame information is equal to that of the another control plane message.

With reference to the second aspect, in a possible implementation of the second aspect, that the radio equipment control sends the system frame information to the radio equipment by using the control plane message includes:
The radio equipment periodically receives the control plane message from the radio equipment control.

The radio equipment control periodically sends the system frame information to the radio equipment by using the control plane message. A granularity of sending the control plane message may have a plurality of choices. For example, the granularity is an orthogonal frequency division multiplexing (orthogonal frequency division multiplexing, OFDM) symbol, a frame, a subframe, or a slot.

For example, the radio equipment control sends the system frame information to the radio equipment by using the control plane message at an interval of one symbol, three symbols, or five symbols. For another example, the radio equipment control sends the system frame information to the radio equipment by using the control plane message at an interval of one frame, three frames, or five frames. For another example, the radio equipment control sends the system frame information to the radio equipment by using the control plane message at an interval of one subframe, three subframes, or five subframes. For another example, the radio equipment control sends the system frame information to the radio equipment by using the control plane message at an interval of one subframe, three subframes, or five subframes. It may be understood that, to avoid service interruption between the radio equipment control and the radio equipment as much as possible, a periodicity at which the radio equipment control sends the system frame information to the radio equipment by using the control plane message may be one frame.

With reference to the second aspect, in a possible implementation of the second aspect, that radio equipment receives a control plane message from radio equipment control includes:
The radio equipment receives the control plane message from the radio equipment control through an enhanced common public radio interface eCPRI.

According to a third aspect, this application provides a system frame number synchronization method, including:
Radio equipment control generates a user plane packet, where the user plane packet carries system frame information and a synchronization identifier, the system frame information indicates a system frame number, and the synchronization identifier indicates radio equipment to adjust a local system frame number based on the system frame information included in the user plane packet; and
the radio equipment control sends the user plane packet to the radio equipment.

The radio equipment control generates the user plane packet, where the user plane packet carries the system frame information and the synchronization identifier. The system frame information indicates the system frame number, and the synchronization identifier indicates the radio equipment to adjust the local system frame number based on the system frame information included in the synchronization plane packet.

In a possible implementation, the system frame information is located in a packet header of the user plane packet. Optionally, the system frame information may use an original system frame number, system hyper frame number, system subframe number, slot number, and/or symbol number in the packet header of the user plane packet. Optionally, the system frame information may alternatively be located in a newly added field in the packet header of the user plane packet, and the newly added field is filled with the system frame number, a system hyper frame number, a system subframe number, a slot number, and/or a symbol number.

In another possible implementation, the system frame information is located in another field of the user packet, and includes but is not limited to a reserved field or a newly added field.

The synchronization identifier is a group of special fields in the synchronization plane packet. For example, if the synchronization identifier in the synchronization plane packet is "1", the synchronization identifier indicates the radio equipment to adjust the local system frame number (a system hyper frame number, a system subframe number, a slot number, and/or a symbol number) based on the system frame information included in the synchronization plane packet. If the synchronization identifier in the synchronization plane packet is "0", the synchronization identifier indicates that the synchronization plane packet is a common synchronization plane packet, and the radio equipment does not need to adjust the local system frame number (the system hyper frame number, the system subframe number, the slot number, and/or the symbol number) based on the system frame information included in the synchronization plane packet.

For another example, when the synchronization plane packet carries the synchronization identifier, the synchronization identifier indicates the radio equipment to adjust the local system frame number (the system hyper frame number, the system subframe number, the slot number, and/or the symbol number) based on the system frame information included in the synchronization plane packet. When the synchronization plane packet does not carry the synchronization identifier, the synchronization plane packet is a common synchronization plane packet, and the radio equipment does not need to adjust the local system frame number (the system hyper frame number, the system subframe number, the slot number, and/or the symbol number) based on the system frame information included in the synchronization plane packet.

It may be understood that there are a plurality of implementations of the synchronization identifier. For example, when a location corresponding to the synchronization identifier in the synchronization plane packet is filled with any character, the synchronization identifier takes effect, and the radio equipment adjusts the local system frame number based on the system frame information included in the synchronization plane packet. When the location corresponding to the synchronization identifier in the synchronization plane packet is null, the synchronization identifier becomes invalid, and the synchronization plane packet is a common synchronization plane packet.

In this embodiment of this application, the radio equipment control generates the user plane packet, where the user plane packet carries the system frame information and the synchronization identifier, the system frame information indicates the system frame number, and the synchronization identifier indicates the radio equipment to adjust the local system frame number based on the system frame information included in the user plane packet; and the radio equipment control sends the user plane packet to the radio equipment. Correspondingly, the radio equipment receives the user plane packet from the radio equipment control, where the user plane packet carries the system frame information and the synchronization identifier, and the system frame information indicates the system frame number; and the radio equipment adjusts the local system frame number based on the synchronization identifier and the system frame information. According to the foregoing method, a system frame number used by the radio equipment is consistent with the system frame number used by the radio equipment control, to ensure that the radio equipment can successfully parse a data packet from the radio equipment control, avoid service interruption, and improve reliability of a communication system.

With reference to the third aspect, in a possible implementation of the third aspect, that the radio equipment control sends the user plane packet to the radio equipment includes:
The radio equipment control periodically sends, to the radio equipment, the user plane packet carrying the synchronization identifier.

Specifically, the radio equipment control periodically selects the synchronization plane packet, and fills the synchronization identifier in the selected synchronization plane packet. Then the radio equipment control sends the synchronization plane packet filled with the synchronization identifier to the radio equipment, so that the radio equipment adjusts the local system frame number (the system hyper frame number, the system subframe number, the slot number, and/or the symbol number) based on the system frame information in the synchronization plane packet carrying the synchronization identifier. A periodicity may be a time granularity, for example, an interval of one frame or one subframe. For example, the radio equipment control selects, at an interval of one frame, one packet from synchronization plane packets whose destination is the radio equipment, and fills the synchronization identifier in the packet. The synchronization identifier indicates the radio equipment to adjust the local system frame number (the system hyper frame number, the system subframe number, the slot number, and/or the symbol number) based on the system frame information in the synchronization plane packet. It may be understood that the periodicity may alternatively be a granularity of a quantity of packets, for example, an interval of five packets. Specifically, the radio equipment control selects one packet at an interval of five packets from user plane packets whose destination is the radio equipment, and fills the synchronization identifier in the packet.

With reference to the third aspect, in a possible implementation of the third aspect, that the radio equipment control sends the user plane packet to the radio equipment includes:

The radio equipment control sends the user plane packet to the radio equipment through an enhanced common public radio interface eCPRI.

According to a fourth aspect, this application provides a system frame number synchronization method, including:
Radio equipment receives a user plane packet from radio equipment control, where the user plane packet carries system frame information and a synchronization identifier, and the system frame information indicates a system frame number; and
the radio equipment adjusts a local system frame number based on the synchronization identifier and the system frame information.

Specifically, in the radio equipment, after receiving the user plane packet from the radio equipment control, and before the radio equipment performs validity check on the user plane packet, the radio equipment first detects whether the user plane packet carries the synchronization identifier. If the user plane packet carries the synchronization identifier, the user plane packet is buffered (that is, is not discarded); or if the user plane packet does not carry the synchronization identifier, normal processing is performed, for example, validity check is performed.

In a possible implementation, the system frame information is located in a packet header of the user plane packet. Optionally, the system frame information may use an original system frame number, system hyper frame number, system subframe number, slot number, and/or symbol number in the packet header of the user plane packet. Optionally, the system frame information may alternatively be located in a newly added field in the packet header of the user plane packet, and the newly added field is filled with the system frame number, a system hyper frame number, a system subframe number, a slot number, and/or a symbol number.

In another possible implementation, the system frame information is located in another field of the user packet, and includes but is not limited to a reserved field or a newly added field.

The synchronization identifier is a group of special fields in the synchronization plane packet. For example, if the synchronization identifier in the synchronization plane packet is "1", the synchronization identifier indicates the radio equipment to adjust the local system frame number (a system hyper frame number, a system subframe number, a slot number, and/or a symbol number) based on the system frame information included in the synchronization plane packet. If the synchronization identifier in the synchronization plane packet is "0", the synchronization identifier indicates that the synchronization plane packet is a common synchronization plane packet, and the radio equipment does not need to adjust the local system frame number (the system hyper frame number, the system subframe number, the slot number, and/or the symbol number) based on the system frame information included in the synchronization plane packet.

For another example, when the synchronization plane packet carries the synchronization identifier, the synchronization identifier indicates the radio equipment to adjust the local system frame number (the system hyper frame number, the system subframe number, the slot number, and/or the symbol number) based on the system frame information included in the synchronization plane packet. When the synchronization plane packet does not carry the synchronization identifier, the synchronization plane packet is a common synchronization plane packet, and the radio equipment does not need to adjust the local system frame number (the system hyper frame number, the system subframe number, the slot number, and/or the symbol number) based on the system frame information included in the synchronization plane packet. It may be understood that there are a plurality of implementations of the synchronization identifier. For example, when a location corresponding to the synchronization identifier in the synchronization plane packet is filled with any character, the synchronization identifier takes effect, and the radio equipment adjusts the local system frame number based on the system frame information included in the synchronization plane packet. When the location corresponding to the synchronization identifier in the synchronization plane packet is null, the synchronization identifier becomes invalid, and the synchronization plane packet is a common synchronization plane packet.

In this embodiment of this application, the radio equipment control generates the user plane packet, where the user plane packet carries the system frame information and the synchronization identifier, the system frame information indicates the system frame number, and the synchronization identifier indicates the radio equipment to adjust the local system frame number based on the system frame information included in the user plane packet; and the radio equipment control sends the user plane packet to the radio equipment. Correspondingly, the radio equipment receives the user plane packet from the radio equipment control, where the user plane packet carries the system frame information and the synchronization identifier, and the system frame information indicates the system frame number; and the radio equipment adjusts the local system frame number based on the synchronization identifier and the system frame information. According to the foregoing method, a system frame number used by the radio equipment is consistent with the system frame number used by the radio equipment control, to ensure that the radio equipment can successfully parse a data packet from the radio equipment control, avoid service interruption, and improve reliability of a communication system.

With reference to the fourth aspect, in a possible implementation of the fourth aspect, the system frame information further includes one or more of the following: a system hyper frame number, a system subframe number, a slot number, and/or a symbol number, and the method further includes:

The radio equipment adjusts a local system hyper frame number, system subframe number, slot number, and/or symbol number based on the system frame information.

When the system frame information further includes the system hyper frame number, a system subframe number, a slot number, and/or the symbol number, the radio equipment adjusts the local system hyper frame number, the system subframe number, the slot number, and/or the symbol number based on the system frame information, so that an adjusted local system hyper frame number, system subframe number, slot number, and/or symbol number are consistent with the system hyper frame number, the system subframe number, the slot number, and/or the symbol number from the radio equipment control. In other words, the radio equipment adjusts the local system frame information based on the system frame information from the radio equipment control.

With reference to the fourth aspect, in a possible implementation of the fourth aspect, after that the radio equipment adjusts a local system frame number based on the synchronization identifier and the system frame information, the method further includes:
The radio equipment adjusts a receive window of the radio equipment based on an adjusted local system frame number; and
the radio equipment detects whether the user plane packet is located in an adjusted receive window of the radio equipment; and
if yes, the radio equipment processes the user plane packet; or
if not, the radio equipment discards the user plane packet.

Adjusting, by the radio equipment based on the adjusted local system frame number, system hyper frame number, system subframe number, slot number, and/or symbol number, a local environment variable related to the system frame information includes but is not limited to: adjusting the receive window of the radio equipment based on the adjusted system frame number; or processing, based on the adjusted system frame number, a data packet stored in a buffer module. After the adjustment, the radio equipment detects whether the system frame information carried in the user plane packet is located in the receive window of the radio equipment. If the user plane packet is located in the adjusted receive window of the radio equipment, the radio equipment processes the user plane packet; or if the user plane packet is not located in the adjusted receive window of the radio equipment, the radio equipment discards the user plane packet. According to the foregoing method, service interruption caused by discarding an available user plane packet by the radio equipment is avoided, and the communication reliability is improved.

With reference to the fourth aspect, in a possible implementation of the fourth aspect, the radio equipment periodically receives the user plane packet that is from the radio equipment control and that carries the synchronization identifier.

Specifically, the radio equipment control periodically selects the synchronization plane packet, and fills the synchronization identifier in the selected synchronization plane packet. Then the radio equipment control sends the synchronization plane packet filled with the synchronization identifier to the radio equipment, so that the radio equipment adjusts the local system frame number (the system hyper frame number, the system subframe number, the slot number, and/or the symbol number) based on the system frame information in the synchronization plane packet carrying the synchronization identifier. A periodicity may be a time granularity, for example, an interval of one frame or one subframe. For example, the radio equipment control selects, at an interval of one frame, one packet from synchronization plane packets whose destination is the radio equipment, and fills the synchronization identifier in the packet. The synchronization identifier indicates the radio equipment to adjust the local system frame number (the system hyper frame number, the system subframe number, the slot number, and/or the symbol number) based on the system frame information in the synchronization plane packet. It may be understood that the periodicity may alternatively be a granularity of a quantity of packets, for example, an interval of five packets. Specifically, the radio equipment control selects one packet at an interval of five packets from user plane packets whose destination is the radio equipment, and fills the synchronization identifier in the packet.

With reference to the fourth aspect, in a possible implementation of the fourth aspect, that the radio equipment receives a user plane packet from radio equipment control includes:
The radio equipment receives N user plane packets that are from the radio equipment control and that include the synchronization identifier, where N is an integer greater than 1; and
that the radio equipment adjusts a local system frame number based on the system frame information includes:
   the radio equipment determines N to-be-adjusted system frame number differences based on the system frame information carried in the N user plane packets that include the synchronization identifier and the local system frame number of the radio equipment; and
   when variations of adjacent system frame number differences in the N to-be-adjusted system frame number differences are consistent, the radio equipment adjusts the local system frame number based on the N to-be-adjusted system frame number differences.

In a process in which the radio equipment receives the N user plane packets that include the synchronization identifier, each time the radio equipment receives one user plane packet including the synchronization identifier, the radio equipment determines, based on the system frame information carried in the user plane packet and the local system frame number of the radio equipment, a system frame number difference to be adjusted this time. By analogy, the radio equipment determines, based on the system frame information carried in the N user plane packets and the local system frame number of the radio equipment, the N to-be-adjusted system frame number differences.

It may be understood that, when the system frame information further includes the system hyper frame number, the system subframe number, the slot number, and/or the symbol number, the radio equipment determines, based on the system frame information carried in the N user plane packets and the local system hyper frame number, system subframe number, slot number, and/or symbol number of the radio equipment, N to-be-adjusted system hyper frame number differences, system subframe number differences, slot number differences, and/or symbol number differences.

When the variations of the adjacent system frame number differences in the N to-be-adjusted system frame number differences are consistent, the radio equipment adjusts the local system frame number based on the system frame information carried in the N user plane packets.

According to the foregoing method, on the premise that system frame information of the radio equipment control and the radio equipment is synchronized, the radio equipment is prevented from frequently adjusting local system frame information, to reduce an operation burden of the radio equipment.

With reference to the fourth aspect, in a possible implementation of the fourth aspect, that the radio equipment receives a user plane packet from radio equipment control includes:
The radio equipment receives the user plane packet from the radio equipment control through an enhanced common public radio interface eCPRI.

According to a fifth aspect, this application provides a communication device. The communication device is used in radio equipment control, and the communication device includes:
a processing unit, configured to generate system frame information, where the system frame information indicates a system frame number; and
a transceiver unit, configured to send the system frame information to radio equipment by using a control plane message.

In a possible implementation, the system frame information further includes a system hyper frame number, a system subframe number, a slot number, and/or a symbol number.

In a possible implementation, a sending priority of the control plane message carrying the system frame information is higher than that of a user plane packet.

In a possible implementation, the sending priority of the control plane message carrying the system frame information is higher than that of another control plane message.

In a possible implementation, the transceiver unit is specifically configured to periodically send the system frame information to the radio equipment by using the control plane message.

In a possible implementation, the transceiver unit is specifically configured to send the control plane message to the radio equipment control through an enhanced common public radio interface eCPRI, where the control plane message carries the system frame information.

According to a sixth aspect, this application provides a communication device. The communication device is used in radio equipment control, and the communication device includes a processing unit and a transceiver unit.

In a possible implementation, the processing unit is configured to generate a user plane packet, where the user plane packet carries system frame information and a synchronization identifier, the system frame information indicates a system frame number, and the synchronization identifier indicates radio equipment to adjust a local system frame number based on the system frame information included in the user plane packet; and
the transceiver unit is configured to send the user plane packet to the radio equipment.

In a possible implementation, the system frame information further includes a system hyper frame number, a system subframe number, a slot number, and/or a symbol number.

In a possible implementation, the system frame information is located in a packet header of the user plane packet.

In a possible implementation, the synchronization identifier is located in the packet header of the user plane packet.

In a possible implementation, the transceiver unit is specifically configured to periodically send, to the radio equipment, the user plane packet carrying the synchronization identifier.

In a possible implementation, the transceiver unit is specifically configured to send the user plane packet to the radio equipment through an enhanced common public radio interface eCPRI.

According to a seventh aspect, this application provides a communication device. The communication device is used in radio equipment, and the communication device includes:
a transceiver unit, configured to receive a control plane message from radio equipment control, where the control plane message carries system frame information, and the system frame information indicates a system frame number; and
a processing unit, configured to adjust a local system frame number based on the system frame information.

In a possible implementation, the system frame information further includes a system hyper frame number or a symbol number; and
the processing unit is further configured to adjust a local system hyper frame number, system subframe number, slot number, and/or symbol number based on the system frame information.

In a possible implementation, the transceiver unit is specifically configured to receive, from the radio equipment control, N control plane messages that carry the system frame information, where N is an integer greater than 1;
the processing unit is specifically configured to determine N to-be-adjusted system frame number differences based on the system frame information carried in the N control plane messages and the local system frame number of the radio equipment; and
the processing unit is specifically configured to: when variations of adjacent system frame number differences in the N to-be-adjusted system frame number differences are consistent, the processing unit adjusts the local system frame number based on the N to-be-adjusted system frame number differences.

In a possible implementation, a sending priority of the control plane message carrying the system frame information is higher than that of a user plane packet.

In a possible implementation, the sending priority of the control plane message carrying the system frame information is higher than that of another control plane message.

In a possible implementation, the processing unit is specifically configured to periodically receive the control plane message from the radio equipment control.

In a possible implementation, the transceiver unit is specifically configured to receive the control plane message from the radio equipment control through an enhanced common public radio interface eCPRI.

According to an eighth aspect, this application provides a communication device. The communication device is used in radio equipment, and the communication device includes:
a transceiver unit, configured to receive a user plane packet from radio equipment control, where the user plane packet carries system frame information and a synchronization identifier, and the system frame information indicates a system frame number; and
a processing unit, configured to adjust a local system frame number based on the synchronization identifier and the system frame information.

In a possible implementation, the system frame information further includes one or more of the following: a system hyper frame number, a system subframe number, a slot number, and/or a symbol number, and the processing unit is further configured to adjust a local system hyper frame number, system subframe number, slot number, and/or symbol number based on the system frame information.

In a possible implementation, the processing unit is further configured to detect whether the system frame information carried in the user plane packet is located in a receive window of the radio equipment.

In a possible implementation, the processing unit is further configured to adjust the receive window of the radio equipment based on an adjusted local system frame number;
the processing unit is further configured to detect whether the user plane packet is located in an adjusted receive window of the radio equipment;
the processing unit is further configured to: if yes, process the user plane packet; and
the processing unit is further configured to: if not, discard the user plane packet.

In a possible implementation, the transceiver unit is further configured to periodically receive the user plane packet that is from the radio equipment control and that carries the synchronization identifier.

In a possible implementation, the transceiver unit is further configured to receive N user plane packets that are from the radio equipment control and that include the synchronization identifier, where N is an integer greater than 1;
the processing unit is further configured to determine N to-be-adjusted system frame number differences based on the system frame information carried in the N user plane packets that include the synchronization identifier and the local system frame number of the radio equipment; and
the processing unit is further configured to: when variations of adjacent system frame number differences in the N to-be-adjusted system frame number differences are consistent, adjust the local system frame number based on the N to-be-adjusted system frame number differences.

In a possible implementation, the system frame information is located in a packet header of the user plane packet.

In a possible implementation, the synchronization identifier is located in the packet header of the user plane packet.

In a possible implementation, the transceiver unit is specifically configured to receive the user plane packet from the radio equipment control through an enhanced common public radio interface eCPRI.

According to a ninth aspect, this application provides a communication device. The communication device is used in radio equipment control, and the communication device includes:
a processor, configured to generate system frame information, where the system frame information indicates a system frame number; and
a transceiver, configured to send the system frame information to radio equipment by using a control plane message.

In a possible implementation, the system frame information further includes a system hyper frame number, a system subframe number, a slot number, and/or a symbol number.

In a possible implementation, a sending priority of the control plane message carrying the system frame information is higher than that of a user plane packet.

In a possible implementation, the sending priority of the control plane message carrying the system frame information is higher than that of another control plane message.

In a possible implementation, the transceiver is specifically configured to periodically send the system frame information to the radio equipment by using the control plane message.

In a possible implementation, the transceiver is specifically configured to send the control plane message to the radio equipment control through an enhanced common public radio interface eCPRI, where the control plane message carries the system frame information.

According to a tenth aspect, this application provides a communication device. The communication device is used in radio equipment control, and the communication device includes a processor and a transceiver.

In a possible implementation, the processor is configured to generate a user plane packet, where the user plane packet carries system frame information and a synchronization identifier, the system frame information indicates a system frame number, and the synchronization identifier indicates radio equipment to adjust a local system frame number based on the system frame information included in the user plane packet; and
the transceiver is configured to send the user plane packet to the radio equipment.

In a possible implementation, the system frame information further includes a system hyper frame number, a system subframe number, a slot number, and/or a symbol number.

In a possible implementation, the system frame information is located in a packet header of the user plane packet.

In a possible implementation, the synchronization identifier is located in the packet header of the user plane packet.

In a possible implementation, the transceiver is specifically configured to periodically send, to the radio equipment, the user plane packet carrying the synchronization identifier.

In a possible implementation, the transceiver is specifically configured to send the user plane packet to the radio equipment through an enhanced common public radio interface eCPRI.

According to an eleventh aspect, this application provides a communication device. The communication device is used in radio equipment, and the communication device includes:
a transceiver, configured to receive a control plane message from radio equipment control, where the control plane message carries system frame information, and the system frame information indicates a system frame number; and
a processor, configured to adjust a local system frame number based on the system frame information.

In a possible implementation, the system frame information further includes a system hyper frame number or a symbol number; and
the processor is further configured to adjust a local system hyper frame number, system subframe number, slot number, and/or symbol number based on the system frame information.

In a possible implementation, the transceiver is specifically configured to receive, from the radio equipment control, N control plane messages that carry the system frame information, where N is an integer greater than 1;
the processor is specifically configured to determine N to-be-adjusted system frame number differences based on the system frame information carried in the N control plane messages and the local system frame number of the radio equipment; and
the processor is specifically configured to: when variations of adjacent system frame number differences in the N to-be-adjusted system frame number differences are consistent, the processor adjusts the local system frame number based on the N to-be-adjusted system frame number differences.

In a possible implementation, a sending priority of the control plane message carrying the system frame information is higher than that of a user plane packet.

In a possible implementation, the sending priority of the control plane message carrying the system frame information is higher than that of another control plane message.

In a possible implementation, the processor is specifically configured to periodically receive the control plane message from the radio equipment control.

In a possible implementation, the transceiver is specifically configured to receive the control plane message from the radio equipment control through an enhanced common public radio interface eCPRI.

According to a twelfth aspect, this application provides a communication device. The communication device is used in radio equipment, and the communication device includes:
a transceiver, configured to receive a user plane packet from radio equipment control, where the user plane packet carries system frame information and a synchronization identifier, and the system frame information indicates a system frame number; and
a processor, configured to adjust a local system frame number based on the synchronization identifier and the system frame information.

In a possible implementation, the system frame information further includes one or more of the following: a system hyper frame number, a system subframe number, a slot number, and/or a symbol number, and the processor is further configured to adjust a local system hyper frame number, system subframe number, slot number, and/or symbol number based on the system frame information.

In a possible implementation, the processor is further configured to detect whether the system frame information carried in the user plane packet is located in a receive window of the radio equipment.

In a possible implementation, the processor is further configured to adjust the receive window of the radio equipment based on an adjusted local system frame number;
the processor is further configured to detect whether the user plane packet is located in an adjusted receive window of the radio equipment;
the processor is further configured to: if yes, process the user plane packet; and
the processor is further configured to: if not, discard the user plane packet.

In a possible implementation, the transceiver is further configured to periodically receive the user plane packet that is from the radio equipment control and that carries the synchronization identifier.

In a possible implementation, the transceiver is further configured to receive N user plane packets that are from the radio equipment control and that include the synchronization identifier, where N is an integer greater than 1;
the processor is further configured to determine N to-be-adjusted system frame number differences based on the system frame information carried in the N user plane packets that include the synchronization identifier and the local system frame number of the radio equipment; and
the processor is further configured to: when variations of adjacent system frame number differences in the N to-be-adjusted system frame number differences are consistent, adjust the local system frame number based on the N to-be-adjusted system frame number differences.

In a possible implementation, the system frame information is located in a packet header of the user plane packet.

In a possible implementation, the synchronization identifier is located in the packet header of the user plane packet.

In a possible implementation, the transceiver is specifically configured to receive the user plane packet from the radio equipment control through an enhanced common public radio interface eCPRI.

According to a thirteenth aspect, a communication device is provided, to implement the foregoing methods. The communication device may be the radio equipment control and/or the radio equipment in the first aspect; an apparatus including the radio equipment control and/or the radio equipment, or an apparatus included in the radio equipment control and/or the radio equipment, for example, a system chip. The communication device includes a corresponding module, unit, or means (means) for implementing the foregoing method. The module, unit, or means may be implemented by using hardware or software, or implemented by hardware executing corresponding software. The hardware or the software includes one or more modules or units corresponding to the foregoing functions.

According to a fourteenth aspect, a communication device is provided. The communication device includes a processor and a memory. The memory is configured to store computer instructions. When the processor executes the instructions, the communication device is enabled to perform the method according to any one of the foregoing aspects. The communication device may be the radio equipment control and/or the radio equipment in the first aspect; an apparatus including the radio equipment control and/or the radio equipment, or an apparatus included in the radio equipment control and/or the radio equipment, for example, a system chip.

According to a fifteenth aspect, a communication device is provided. The communication device includes a processor. The processor is configured to: be coupled to a memory; and after reading instructions in the memory, perform the method in any one of the foregoing aspects according to the instructions. The memory and the communication device are independent of each other. The communication device may be the radio equipment control and/or the radio equipment in the first aspect; an apparatus including the radio equipment control and/or the radio equipment, or an apparatus included in the radio equipment control and/or the radio equipment, for example, a system chip.

According to a sixteenth aspect, a computer-readable storage medium is provided. The computer-readable storage medium stores instructions. When the instructions are run on a communication device, the communication device is enabled to perform the method in any one of the foregoing aspects. The communication device may be the radio equipment control and/or the radio equipment in the first aspect; an apparatus including the radio equipment control and/or the radio equipment, or an apparatus included in the radio equipment control and/or the radio equipment, for example, a system chip.

According to a seventeenth aspect, a computer program product including instructions is provided. When the instructions are run on a communication device, the communication device is enabled to perform the method in any one of the foregoing aspects. The communication device may be the radio equipment control and/or the radio equipment in the first aspect; an apparatus including the radio equipment control and/or the radio equipment, or an apparatus included in the radio equipment control and/or the radio equipment, for example, a system chip.

According to an eighteenth aspect, a communication device is provided (for example, the communication device may be a chip or a chip system). The communication device includes a processor, configured to implement a function related to any one of the foregoing aspects. In a possible design, the communication device further includes a memory. The memory is configured to store necessary program instructions and data. When the communication device is a chip system, the communication device may include a chip, or may include a chip and another discrete component.

According to a nineteenth aspect, a chip is provided. The chip includes a processor and a communication interface. The communication interface is configured to communicate with a module other than the shown chip. The processor is configured to run a computer program or instructions, so that an apparatus in which the chip is installed can perform the method in any one of the foregoing aspects.

According to a twentieth aspect, a communication system is provided. The communication system includes the radio equipment control and the radio equipment in the foregoing aspects.

### BRIEF DESCRIPTION OF DRAWINGS

FIG. 1a is a schematic diagram of a system architecture related to embodiments of this application;
FIG. 1b is a schematic diagram of data processing in radio equipment related to embodiments of this application;
FIG. 2 is a schematic diagram of an embodiment of a system frame number synchronization method provided in embodiments of this application;
FIG. 3 is a schematic diagram of an embodiment of a system frame number synchronization method provided in embodiments of this application;
FIG. 4 is a schematic diagram of a hardware structure of radio equipment according to an embodiment of this application;
FIG. 5 is a schematic diagram of a structure of radio equipment according to an embodiment of this application;
FIG. 6 is a schematic diagram of a hardware structure of radio equipment control according to an embodiment of this application; and
FIG. 7 is a schematic diagram of a structure of radio equipment control according to an embodiment of this application.

### DESCRIPTION OF EMBODIMENTS

The following describes embodiments of this application. It is clearly that described embodiments are merely some but not all of embodiments of this application. A person of ordinary skill in the art may learn that, as a new application scenario emerges, the technical solutions provided in embodiments of this application are also applicable to a similar technical problem.

In the specification, claims, and accompanying drawings of this application, terms such as "first" and "second" are intended to distinguish between similar objects, but do not necessarily indicate a specific order or sequence. It should be understood that the descriptions termed in such a manner are interchangeable in proper cases so that embodiments can be implemented in another order than the order illustrated or described in this application. Names or numbers of steps in this application do not mean that the steps in the method procedure need to be performed in a time/logical sequence indicated by the names or numbers. An execution order of the steps in the procedure that have been named or numbered can be changed based on a technical objective to be achieved, provided that same or similar technical effects can be achieved.

With an increase in air interface bandwidth and a quantity of antennas in a fifth-generation mobile communication technology (fifth-generation, 5G) wireless network, an enhanced common public radio interface (enhanced common public radio interface, eCPRI) is used as an interface between radio equipment control (radio equipment control, REC) and radio equipment (radio equipment, RE).

A possible implementation of the radio equipment control is a baseband unit (baseband unit, BBU). Another possible implementation of the radio equipment control is a radio cloud center (radio cloud center, RCC).

One possible implementation of the radio equipment is an active antenna unit (active antenna unit, AAU). Another possible implementation of the radio equipment is a radio remote unit (radio remote unit, RRU). Another possible implementation of the radio equipment is a remote radio system (radio remote system, RRS).

It should be noted that the radio equipment control further has another implementation, and the radio equipment further has another implementation. This is not limited in embodiments of this application.

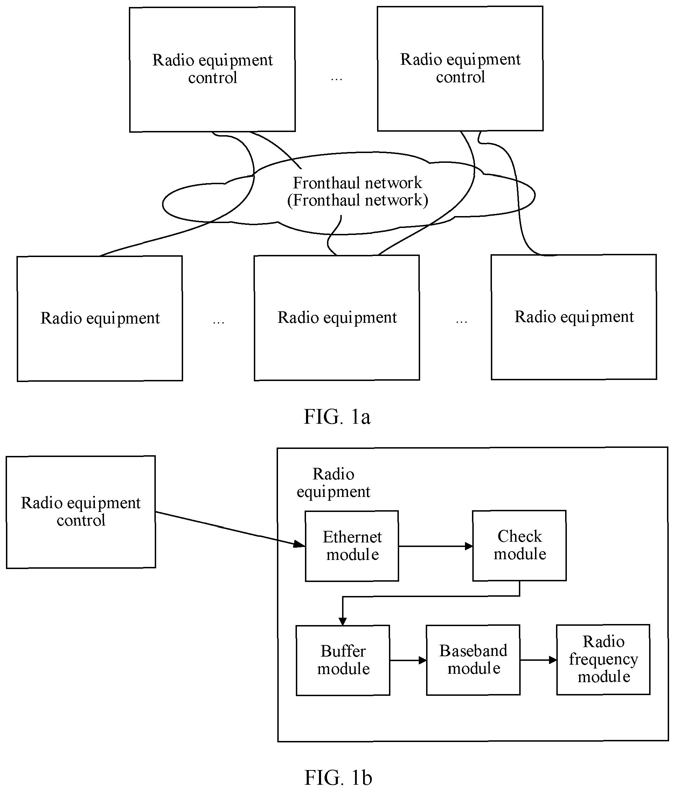

For ease of understanding, refer to FIG. 1a. FIG. 1a is a schematic diagram of a system architecture related to embodiments of this application. FIG. 1a shows a fronthaul network (fronthaul network), or referred to as a front backhaul network.

In the fronthaul network, radio equipment transmits, to radio equipment control through a CPRI (or an eCPRI), time domain data (to be specific, time domain data of an antenna domain) received from each antenna. A geographical distance between the radio equipment and the radio equipment control may be very long. For example, a plurality of radio equipments with a short geographical distance may be generally connected in a star topology, and then time domain data received by the plurality of radio equipments from antennas are aggregated to one optical fiber for transmission. It may be understood that a relationship between the radio equipment control and the radio equipment may be that one radio equipment control corresponds to one or more radio equipments, or a plurality of radio equipment controls correspond to one or more radio equipments. This is not limited in embodiments of this application.

FIG. 1b is a schematic diagram of data processing in radio equipment related to embodiments of this application. The radio equipment includes an ethernet (ethernet, ETH) module, configured to transmit data, for example, a packet or a message, exchanged between radio equipment control and the radio equipment. In FIG. 1b, receiving data from the radio equipment control is used as an example for description. A check module is configured to perform validity check on the data from the radio equipment control. After the data is input from the ETH module, the check module performs validity check on the data. The validity check includes but is not limited to: detecting whether the data is located in a receive window of the radio equipment. If the check succeeds, the data is sent to a buffer (buffer) module. If the check fails, the data is discarded. The buffer module is configured to buffer data on which the validity check succeeds. A baseband (baseband, BB) module and a radio frequency (radio frequency, RF) module are configured to perform the following processing on the data in the buffer module, where the processing includes but is not limited to: demodulation and decoding, radio frequency filter amplification, downconversion, analog-to-digital conversion, or digital filtering.

Based on the CPRI protocol, the eCPRI protocol is developed. In the eCPRI protocol, data is transmitted between radio equipment and radio equipment control in a form of a data packet. In this data transmission manner, a link transmission rate can be improved. However, because a delay variation of the data packet transmission is large, a clock signal cannot be directly transmitted. In addition, because the delay variation of the data packet transmission is large, the radio equipment cannot use information such as a system frame number carried in the data packet as a system frame number of the radio equipment. Currently, in the eCPRI protocol, the precision time protocol (precision time protocol, PTP) is used for implementing a clock synchronization function between radio equipment control and radio equipment. The radio equipment obtains system frame information through calculation based on a clock signal in the PTP protocol by using an algorithm the same as that used by the radio equipment control. To ensure the radio equipment to successfully parse a data packet from the radio equipment control, the radio equipment and the radio equipment control need to use a same clock signal. When the radio equipment and the radio equipment control use different clock signals, for example, a clock of the radio equipment control and a clock of the radio equipment are from different sources; or when a clock signal of the radio equipment control is adjusted, a clock of the radio equipment is adjusted with a lag, and system frame information of the radio equipment is inconsistent with that of the radio equipment control within an adjustment interval between the radio equipment control and the radio equipment, a service exception is caused.

Based on this, this application provides a system frame number synchronization method. A radio equipment control generates system frame information, where the system frame information indicates a system frame number; and the radio equipment control sends the system frame information to radio equipment by using a control plane message. Correspondingly, the radio equipment receives the control plane message from the radio equipment control, where the control plane message carries the system frame information, and the system frame information indicates the system frame number; and the radio equipment adjusts a local system frame number based on the system frame information. According to the foregoing method, a system frame number used by the radio equipment is consistent with the system frame number used by the radio equipment control, to ensure that the radio equipment can successfully parse a data packet from the radio equipment control, avoid service interruption, and improve reliability of a communication system.

Specifically, this application provides two solutions: Solution 1: The radio equipment control sends the system frame information to the radio equipment by using the control plane message. Solution 2: The radio equipment control sends the system frame information to the radio equipment by using a user plane packet, where the user plane packet carries a synchronization identifier. The following separately describes the two solutions with reference to the accompanying drawings.

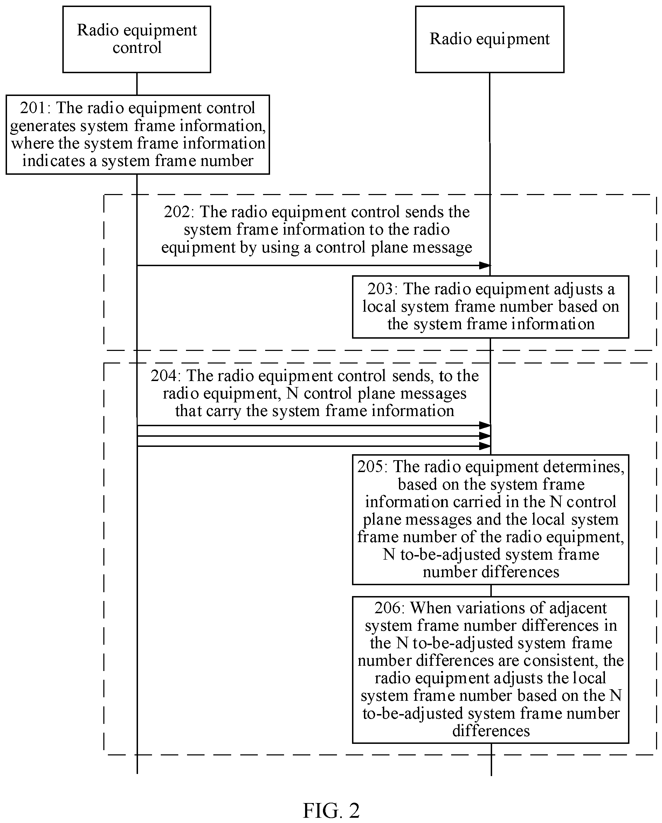

The solution 1 is first described. FIG. 2 is a schematic diagram of an embodiment of a system frame number synchronization method provided in embodiments of this application. The system frame number synchronization method provided in this embodiment of this application includes the following steps.

201: Radio equipment control generates system frame information, where the system frame information indicates a system frame number.

In this embodiment, the radio equipment control generates (or determines) the system frame information, where the system frame information indicates the system frame number. For example, the system frame information includes the system frame number. For another example, the system frame information includes a group of sequence numbers (or a group of sequences, a group of other characters, or the like), and there is a correspondence between the group of sequence numbers (or the group of sequences, the group of other characters, or the like) and the system frame number. After receiving the system frame information, radio equipment may obtain, through parsing, the corresponding system frame number.

The system frame information may further include a system hyper frame number (hyper frame number, HFN), a system subframe number, and/or a symbol number (symbol number). The system hyper frame number is also referred to as a hyper frame number, and the hyper frame number is used for extending a representation capability of the system frame number. Some features require an extremely long paging cycle, and a length of the system frame number cannot satisfy a requirement of the paging cycle. Therefore, a hyper frame number is introduced. The system subframe number is also referred to as a subframe number.

In another possible implementation, the system frame information may further indicate a system hyper frame number, a system subframe number, a slot number, and/or a symbol number. For example, the system frame information includes a group of sequence numbers (or a group of sequences, a group of other characters, or the like), and there is a correspondence between the group of sequence numbers (or the group of sequences, the group of other characters, or the like) and the system hyper frame number, the system subframe number, the slot number, and/or the symbol number. After receiving the system frame information, the radio equipment may obtain, through parsing, the corresponding system hyper frame number, system subframe number, slot number, and/or symbol number.

It should be noted that the system frame information may further indicate system information required for another air interface service, including but not limited to a slot (slot) number and the like.

202: The radio equipment control sends the system frame information to the radio equipment by using a control plane message.

In this embodiment, after generating the system frame information, the radio equipment control sends the system frame information to the radio equipment by using the control plane message. The control plane message includes but is not limited to a control plane message of the eCPRI protocol or a control plane message of the CPRI protocol. Optionally, the system frame information is used as an information element of the control plane message. For example, as shown in Table 1-1:

**Table 1-1**

| System frame information | |
|---|---|
| System hyper frame number | 0 |
| System frame number | 100 |
| Slot number | 0 |
| Symbol number | 12 |

For another example, as shown in Table 1-2:

**Table 1-2**

| System frame information | |
|---|---|
| System hyper frame number | 0 |
| System frame number | 100 |
| Subframe number | 5 |
| Slot number | 0 |
| Symbol number | 12 |

The system frame information may be located in a reserved field of the control plane message, the system frame information may be located in a payload (payload) field of the control plane message, or the system frame information may be located in another field of the control plane message. This is not limited in this embodiment of this application.

Further, in the radio equipment control, a sending priority of the control plane message carrying the system frame information is higher than that of a user plane packet. In other words, in comparison with sending of the user plane packet, the radio equipment control preferentially sends the control plane message carrying the system frame information. This avoids impact caused by an abnormal event such as user plane packet congestion on normal transmission of the control plane message carrying the system frame information. Optionally, in the radio equipment control, the sending priority of the control plane message carrying the system frame information is equal to that of the user plane packet.

Further, in the radio equipment control, the sending priority of the control plane message carrying the system frame information is higher than that of the another control plane message. In other words, in comparison with sending of the another control plane message, the radio equipment control preferentially sends the control plane message carrying the system frame information. Optionally, in the radio equipment control, the sending priority of the control plane message carrying the system frame information is the highest priority in all control plane messages. Optionally, in the radio equipment control, the sending priority of the control plane message carrying the system frame information is equal to that of the another control plane message.

Optionally, the radio equipment control periodically sends the system frame information to the radio equipment by using the control plane message. A granularity of sending the control plane message may have a plurality of choices. For example, the granularity is an orthogonal frequency division multiplexing (orthogonal frequency division multiplexing, OFDM) symbol, a frame, a subframe, or a slot.

For example, the radio equipment control sends the system frame information to the radio equipment by using the control plane message at an interval of one symbol, three symbols, or five symbols. For another example, the radio equipment control sends the system frame information to the radio equipment by using the control plane message at an interval of one frame, three frames, or five frames. For another example, the radio equipment control sends the system frame information to the radio equipment by using the control plane message at an interval of one subframe, three subframes, or five subframes. For another example, the radio equipment control sends the system frame information to the radio equipment by using the control plane message at an interval of one subframe, three subframes, or five subframes. It may be understood that, to avoid service interruption between the radio equipment control and the radio equipment as much as possible, a periodicity at which the radio equipment control sends the system frame information to the radio equipment by using the control plane message may be one frame.

In a plurality of control plane messages that are sent by the radio equipment control to the radio equipment and that carry system frame information, system frame information included in two adjacent control plane messages is inconsistent. For example, the radio equipment control sends three control plane messages, namely, a message 1, a message 2, and a message 3, that carry system frame information to the radio equipment at an interval of one frame. The system frame information carried in the message 1 includes a system frame number 100, the system frame information carried in the message 2 includes a system frame number 101, and the system frame information carried in the message 3 includes a system frame number 103.

203: The radio equipment adjusts a local system frame number based on the system frame information.

In this embodiment, the radio equipment receives the control plane message from the radio equipment control, where the control plane message carries the system frame information. Then, the radio equipment determines the corresponding system frame number based on the system frame information, and adjusts the local system frame number. The radio equipment stores the local system frame number. When the local system frame number is inconsistent with the system frame number from the radio equipment control, the radio equipment adjusts the local system frame number. An adjusted local system frame number is consistent with the system frame number from the radio equipment control.

When the system frame information further includes the system hyper frame number, the system subframe number, the slot number, and/or the symbol number, the radio equipment adjusts a local system hyper frame number, system subframe number, slot number, and/or symbol number based on the system frame information, so that an adjusted local system hyper frame number, system subframe number, slot number, and/or symbol number are consistent with the system hyper frame number, the system subframe number, the slot number, and/or the symbol number from the radio equipment control. In other words, the radio equipment adjusts local system frame information based on the system frame information from the radio equipment control.

Further, adjusting, by the radio equipment based on adjusted local system frame information (including the system frame number, the system hyper frame number, the system subframe number, the slot number, and/or the symbol number), a local environment variable related to the system frame information includes but is not limited to: adjusting a receive window of the radio equipment based on the adjusted system frame number; or processing, based on the adjusted system frame number, a data packet stored in a buffer module.

In a possible implementation, after receiving the system frame information, the radio equipment may wait for a period of time and then adjust the local system frame number (the system hyper frame number, the system subframe number, the slot number, and/or the symbol number) based on the system frame information. For example, when the radio equipment control sends, to the radio equipment at an interval of one frame, the control plane message carrying the system frame information. Then, after receiving the control plane message carrying the system frame information, the radio equipment adjusts, after waiting for one frame, the local system frame information based on the system frame information from the radio equipment control.

In another possible implementation, after receiving the system frame information, the radio equipment may immediately adjust the local system frame number (the system hyper frame number, the system subframe number, the slot number, and/or the symbol number) based on the system frame information, wait for a period of time, and then adjust, based on the adjusted local system frame information, the local environment variable related to the system frame information. For example, after receiving the control plane message carrying the system frame information, the radio equipment immediately adjusts the local system frame information, waits for one frame, and then adjusts, based on the adjusted local system frame information, the local environment variable related to the system frame information. The environment variable may be the receive window of the radio equipment.

For example, the radio equipment adjusts the receive window of the radio equipment based on the adjusted local system frame number. Then, the radio equipment detects whether a user plane packet from the radio equipment control is located in an adjusted receive window of the radio equipment. If yes, the radio equipment processes the user plane packet; or if not, the radio equipment discards the user plane packet.

It may be understood that the waiting duration may be configured based on a processing capability of the radio equipment, or may be configured based on an actual requirement. This is not limited in this embodiment of this application.

It may be understood that, when the radio equipment control periodically sends a control plane message carrying system frame information, the corresponding radio equipment periodically receives the control plane message carrying the system frame information. For example, the radio equipment receives one control plane message that carries system frame information at an interval of one frame.

In a possible implementation, each time the radio equipment receives one control plane message carrying system frame information, the radio equipment adjusts the local system frame information (including the system frame number, the system hyper frame number, and/or the symbol number) based on the system frame information in the control plane message, and then adjusts, based on adjusted local system frame information, a local environment variable related to the system frame information.

In another possible implementation, to avoid frequent adjustment of the local environment variable related to the system frame information and reduce an operation burden of the radio equipment, after receiving N control plane messages that carry system frame information from the radio equipment control, the radio equipment may determine, based on the system frame information carried in the N control plane messages and the local system frame number of the radio equipment, N to-be-adjusted system frame number differences, where N is an integer greater than 1. When variations of adjacent system frame number differences in the N to-be-adjusted system frame number differences are consistent, the radio equipment adjusts the local system frame number based on the to-be-adjusted system frame number differences. For details, refer to steps 204 to 206.

204: The radio equipment control sends, to the radio equipment, the N control plane messages that carry the system frame information.

In this embodiment, the radio equipment control sends, to the radio equipment, the N control plane messages that carry the system frame information, where N is an integer greater than 1. For example, the radio equipment control periodically sends, to the radio equipment, the N control plane messages that carry the system frame information. For another example, the radio equipment control sends, to the radio equipment based on an actual service requirement, the N control plane messages that carry the system frame information.

205: The radio equipment determines, based on the system frame information carried in the N control plane messages and the local system frame number of the radio equipment, the N to-be-adjusted system frame number differences.

In this embodiment, in a process in which the radio equipment receives the N control plane messages that carry the system frame information, each time the radio equipment receives one control plane message carrying the system frame information, the radio equipment determines, based on the system frame information carried in the control plane message and the local system frame number of the radio equipment, a system frame number difference to be adjusted this time. By analogy, the radio equipment determines, based on the system frame information carried in the N control plane messages and the local system frame number of the radio equipment, the N to-be-adjusted system frame number differences.

It may be understood that, when the system frame information further includes the system hyper frame number, the system subframe number, the slot number, and/or the symbol number, the radio equipment determines, based on the system frame information carried in the N control plane messages and the local system hyper frame number, system subframe number, slot number, and/or symbol number of the radio equipment, N to-be-adjusted system hyper frame number differences, system subframe number differences, slot number differences, and/or symbol number differences.

For example, when N=3, the radio equipment receives three control plane messages that carry system frame information, as shown in Table 2:

**Table 2**

| | Control plane message 1 | Control plane message 2 | Control plane message 3 |
|---|---|---|---|
| System hyper frame number | 5 | 5 | 5 |
| System frame number | 110 | 111 | 112 |
| Slot number | 5 | 5 | 5 |
| Symbol number | 5 | 5 | 5 |

Before the radio equipment receives the foregoing three control plane messages that carry the system frame information, a local system frame number is 100, a system hyper frame number is 0, a symbol number is 0, and a slot number is 0. Based on this, three to-be-adjusted system frame number differences, system hyper frame number differences, slot number differences, and symbol number differences that are determined by the radio equipment are shown in Table 3:

**Table 3**

| | 1^{st} | 2^{nd} | 3^{rd} |
|---|---|---|---|
| System hyper frame number | 5 | 5 | 5 |
| System frame number | 10 | 11 | 12 |
| Slot number | 5 | 5 | 5 |
| Symbol number | 5 | 5 | 5 |

It can be learned from Table 3 that a variation between the second to-be-adjusted system frame number difference and the first to-be-adjusted system frame number difference is 1, and a variation between the third to-be-adjusted system frame number difference and the second to-be-adjusted system frame number difference is 1; a variation between the second to-be-adjusted system hyper frame number difference and the first to-be-adjusted system hyper frame number difference is 0, and a variation between the third to-be-adjusted system hyper frame number difference and the second to-be-adjusted system hyper frame number difference is 0; a variation between the second to-be-adjusted slot number difference and the first to-be-adjusted slot number difference is 0, and a variation between the third to-be-adjusted slot number difference and the second to-be-adjusted slot number difference is 0; and a variation between the second to-be-adjusted symbol number difference and the first to-be-adjusted symbol number difference is 0, and a variation between the third to-be-adjusted symbol number difference and the second to-be-adjusted symbol number difference is 0. Therefore, the radio equipment determines that the variations of adjacent system frame number differences in the N to-be-adjusted system frame number differences are consistent (similarly, the variation of the system hyper frame number difference is consistent with the variation of the symbol number difference), and proceeds to step 206.

206: When the variations of the adjacent system frame number differences in the N to-be-adjusted system frame number differences are consistent, the radio equipment adjusts the local system frame number based on the N to-be-adjusted system frame number differences.

In step 206, when the variations of the adjacent system frame number differences in the N to-be-adjusted system frame number differences are consistent, the radio equipment adjusts the local system frame number based on the N to-be-adjusted system frame number differences.

Optionally, when the system frame information further includes the system hyper frame number, and when variations of adjacent system hyper frame number differences in the N to-be-adjusted system hyper frame number differences are consistent, the radio equipment adjusts the local system hyper frame number based on the N to-be-adjusted system hyper frame number differences. When the system frame information further includes the slot number, and when variations of adjacent slot number differences in the N to-be-adjusted slot number differences are consistent, the radio equipment adjusts the local slot number based on the N to-be-adjusted slot number differences. When the system frame information further includes the symbol number, and when variations of adjacent symbol number differences in the N to-be-adjusted symbol number differences are consistent, the radio equipment adjusts the local symbol number based on the N to-be-adjusted symbol number differences.

Table 2 and Table 3 are used as an example for description. In this case, the radio equipment adjusts a local system frame number based on three pieces of to-be-adjusted system frame information. An adjusted local system frame number is 112, an adjusted local system hyper frame number is 5, and an adjusted local symbol number is 5.

It may be understood that, when the variations of the adjacent system frame number differences in the N to-be-adjusted system frame number differences are inconsistent, the radio equipment may continue to wait. When in an (N+1)^{th} control plane message to an 2N^{th} control plane message that carry system frame information, when variations of adjacent system frame number difference in the N to-be-adjusted system frame number differences are consistent, the radio equipment adjusts the local system frame number based on (N+1)^{th} to 2N^{th} to-be-adjusted system frame number differences.

In this embodiment of this application, the radio equipment control generates the system frame information, where the system frame information indicates the system frame number; and the radio equipment control sends the system frame information to the radio equipment by using the control plane message. Correspondingly, the radio equipment receives the control plane message from the radio equipment control, where the control plane message carries the system frame information, and the system frame information indicates the system frame number; and the radio equipment adjusts the local system frame number based on the system frame information. According to the foregoing method, a system frame number used by the radio equipment is consistent with the system frame number used by the radio equipment control, to ensure that the radio equipment can successfully parse a data packet from the radio equipment control, avoid service interruption, and improve reliability of a communication system.

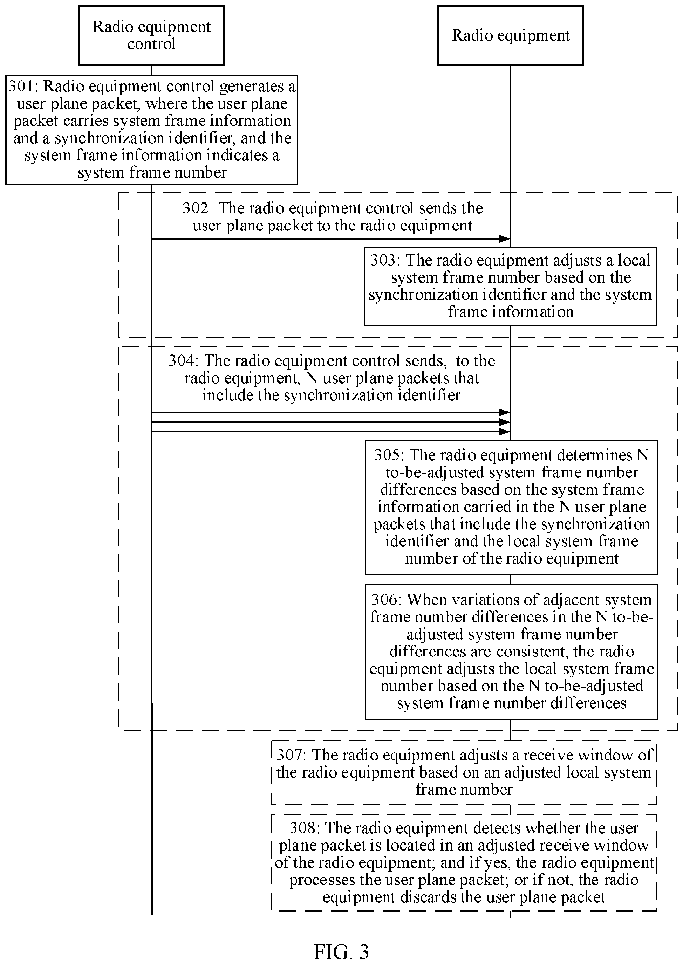

Second, the solution 2 is described. FIG. 3 is a schematic diagram of an embodiment of a system frame number synchronization method provided in embodiments of this application. The system frame number synchronization method provided in this embodiment of this application includes the following steps.

301: Radio equipment control generates a user plane packet, where the user plane packet carries system frame information and a synchronization identifier, and the system frame information indicates a system frame number.

In this embodiment, the radio equipment control generates the user plane packet, where the user plane packet carries the system frame information and the synchronization identifier. The system frame information indicates the system frame number, and the synchronization identifier indicates radio equipment to adjust a local system frame number based on the system frame information included in the synchronization plane packet.

In a possible implementation, the system frame information is located in a packet header of the user plane packet. Optionally, the system frame information may use an original system frame number, system hyper frame number, system subframe number, slot number, and/or symbol number in the packet header of the user plane packet. Optionally, the system frame information may alternatively be located in a newly added field in the packet header of the user plane packet, and the newly added field is filled with the system frame number, a system hyper frame number, a system subframe number, a slot number, and/or a symbol number.

In another possible implementation, the system frame information is located in another field of the user packet, and includes but is not limited to a reserved field or a newly added field.

The synchronization identifier is a group of special fields in the synchronization plane packet. For example, if the synchronization identifier in the synchronization plane packet is "1", the synchronization identifier indicates the radio equipment to adjust the local system frame number (a system hyper frame number, a system subframe number, a slot number, and/or a symbol number) based on the system frame information included in the synchronization plane packet. If the synchronization identifier in the synchronization plane packet is "0", the synchronization identifier indicates that the synchronization plane packet is a common synchronization plane packet, and the radio equipment does not need to adjust the local system frame number (the system hyper frame number, the system subframe number, the slot number, and/or the symbol number) based on the system frame information included in the synchronization plane packet.

It may be understood that there are a plurality of implementations of the synchronization identifier. For example, when a location corresponding to the synchronization identifier in the synchronization plane packet is filled with any character, the synchronization identifier takes effect, and the radio equipment adjusts the local system frame number based on the system frame information included in the synchronization plane packet. When the location corresponding to the synchronization identifier in the synchronization plane packet is null, the synchronization identifier becomes invalid, and the synchronization plane packet is a common synchronization plane packet.

For specific descriptions of the system frame information, refer to the embodiment shown in FIG. 2. Details are not described herein again.

302: The radio equipment control sends the user plane packet to the radio equipment.

In this embodiment, in a possible implementation, the radio equipment control may include the synchronization identifier in each synchronization plane packet whose destination is the radio equipment. Then the radio equipment control sends the synchronization plane packet filled with the synchronization identifier to the radio equipment, so that the radio equipment adjusts the local system frame number (the system hyper frame number, the system subframe number, the slot number, and/or the symbol number) based on system frame information in each synchronization plane packet from the radio equipment control.

In another possible implementation, the radio equipment control periodically selects a synchronization plane packet, and fills the synchronization identifier in the selected synchronization plane packet. Then the radio equipment control sends the synchronization plane packet filled with the synchronization identifier to the radio equipment, so that the radio equipment adjusts the local system frame number (the system hyper frame number, the system subframe number, the slot number, and/or the symbol number) based on system frame information in the synchronization plane packet carrying the synchronization identifier. A periodicity may be a time granularity, for example, an interval of one frame or one subframe. For example, the radio equipment control selects, at an interval of one frame, one packet from synchronization plane packets whose destination is the radio equipment, and fills the synchronization identifier in the packet. The synchronization identifier indicates the radio equipment to adjust the local system frame number (the system hyper frame number, the system subframe number, the slot number, and/or the symbol number) based on system frame information in the synchronization plane packet. It may be understood that the periodicity may alternatively be a granularity of a quantity of packets, for example, an interval of five packets. Specifically, the radio equipment control selects one packet at an interval of five packets from user plane packets whose destination is the radio equipment, and fills the synchronization identifier in the packet.

In another possible implementation, the radio equipment control selects a synchronization plane packet according to an instruction, and fills the synchronization identifier in the selected synchronization plane packet. Then the radio equipment control sends the synchronization plane packet filled with the synchronization identifier to the radio equipment, so that the radio equipment adjusts the local system frame number (the system hyper frame number, the system subframe number, the slot number, and/or the symbol number) based on system frame information in the synchronization plane packet carrying the synchronization identifier.

303: The radio equipment adjusts the local system frame number based on the synchronization identifier and the system frame information.

In this embodiment, after receiving the synchronization plane packet that carries the synchronization identifier and that is from the radio equipment control, the radio equipment adjusts the local system frame number based on the synchronization identifier and the system frame information. Specifically, in the radio equipment, after receiving the user plane packet from the radio equipment control, and before the radio equipment performs validity check on the user plane packet, the radio equipment first detects whether the user plane packet carries the synchronization identifier. If the user plane packet carries the synchronization identifier, step 303 is performed; or if the user plane packet does not carry the synchronization identifier, the radio equipment performs validity check on the user plane packet.

For the synchronization plane packet carrying the synchronization identifier, the radio equipment may first not perform validity check, or the radio equipment may perform validity check on the synchronization plane packet. Even if the validity check on the synchronization plane packet fails, the radio equipment temporarily does not discard the synchronization plane packet. For details, refer to steps 307 and 308.

A specific adjustment method is similar to step 203. Details are not described herein again.

304: The radio equipment control sends, to the radio equipment, N user plane packets that include the synchronization identifier.

In this embodiment, the radio equipment control sends the N user plane packets that include the synchronization identifier to the radio equipment, where N is an integer greater than 1. For example, the radio equipment control periodically sends the N user plane packets that include the synchronization identifier to the radio equipment. For another example, the radio equipment control sends, to the radio equipment based on an actual service requirement, N control plane messages that carry system frame information.

305: The radio equipment determines N to-be-adjusted system frame number differences based on the system frame information carried in the N user plane packets that include the synchronization identifier and the local system frame number of the radio equipment.

In this embodiment, in a process in which the radio equipment receives the N user plane packets that include the synchronization identifier, each time the radio equipment receives one user plane packet including the synchronization identifier, the radio equipment determines, based on the system frame information carried in the user plane packet including the synchronization identifier and the local system frame number of the radio equipment, a system frame number difference to be adjusted this time. By analogy, the radio equipment determines, based on the system frame information carried in the N user plane packets that include the synchronization identifier and the local system frame number of the radio equipment, the N to-be-adjusted system frame number differences.

It may be understood that, when the system frame information further includes a system hyper frame number, a system subframe number, a slot number, and/or a symbol number, the radio equipment determines, based on the system frame information carried in the N user plane packets that include the synchronization identifier and the local system hyper frame number, system subframe number, slot number, and/or symbol number of the radio equipment, N to-be-adjusted system hyper frame number differences, system subframe number differences, slot number differences, and/or symbol number differences.

306: When variations of adjacent system frame number differences in the N to-be-adjusted system frame number differences are consistent, the radio equipment adjusts the local system frame number based on the N to-be-adjusted system frame number differences.

Optionally, when the system frame information further includes the system hyper frame number, and when variations of adjacent system hyper frame number differences in the N to-be-adjusted system hyper frame number differences are consistent, the radio equipment adjusts the local system hyper frame number based on the N to-be-adjusted system hyper frame number differences. When the system frame information further includes the slot number, and when variations of adjacent slot number differences in the N to-be-adjusted slot number differences are consistent, the radio equipment adjusts the local slot number based on the N to-be-adjusted slot number differences. When the system frame information further includes the symbol number, and when variations of adjacent symbol number differences in the N to-be-adjusted symbol number differences are consistent, the radio equipment adjusts the local symbol number based on the N to-be-adjusted symbol number differences.

It may be understood that, when the variations of the adjacent system frame number differences in the N to-be-adjusted system frame number differences are inconsistent, the radio equipment may continue to wait. When variations of adjacent system frame number differences in N to-be-adjusted system frame number differences in an (N+1)^{th} user plane packet that includes the synchronization identifier to an 2N^{th} user plane packet that includes the synchronization identifier and that carry system frame information are consistent, the radio equipment adjusts the local system frame number based on (N+1)^{th} to 2N^{th} to-be-adjusted system frame number differences.

307: The radio equipment adjusts a receive window of the radio equipment based on an adjusted local system frame number.

After step 303 or 306, step 307 is performed. Steps 307 and 308 are optional steps.

In this embodiment, adjusting, by the radio equipment based on an adjusted local system frame number, system hyper frame number, system subframe number, slot number, and/or symbol number, a local environment variable related to the system frame information includes but is not limited to: adjusting the receive window of the radio equipment based on the adjusted system frame number; or processing, based on the adjusted system frame number, a data packet stored in a buffer module.

In this case, the radio equipment temporarily stores the synchronization plane packet that carries the system frame information (where the synchronization plane packet carries the synchronization identifier). The radio equipment may perform validity check on the synchronization plane packet before step 307. Even if the check fails, the radio equipment does not discard the packet but temporarily stores the packet. Alternatively, the radio equipment may not perform validity check on the synchronization plane packet before step 307, and the radio equipment directly and temporarily stores the packet.

308: The radio equipment detects whether the user plane packet is located in an adjusted receive window of the radio equipment; and if yes, the radio equipment processes the user plane packet; or if not, the radio equipment discards the user plane packet.

In this embodiment, after the radio equipment adjusts the local system frame number (the system hyper frame number, the system subframe number, the slot number, and/or the symbol number) based on the system frame information carried in the user plane packet, the radio equipment adjusts the local related environment variable, for example, adjusts the receive window of the radio equipment. Then, the radio equipment detects whether the user plane packet is located in the adjusted receive window of the radio equipment. Validity check is not performed on the user plane packet, or validity check is performed on the user plane packet but the user plane packet is not discarded before step 307.

If the user plane packet is located in the adjusted receive window of the radio equipment, the radio equipment processes the user plane packet; or if the user plane packet is not located in the adjusted receive window of the radio equipment, the radio equipment discards the user plane packet.

In this embodiment of this application, the radio equipment control generates the user plane packet, where the user plane packet carries the system frame information and the synchronization identifier, the system frame information indicates the system frame number, and the synchronization identifier indicates the radio equipment to adjust the local system frame number based on the system frame information included in the user plane packet; and the radio equipment control sends the user plane packet to the radio equipment. Correspondingly, the radio equipment receives the user plane packet from the radio equipment control, where the user plane packet carries the system frame information and the synchronization identifier, and the system frame information indicates the system frame number; and the radio equipment adjusts the local system frame number based on the synchronization identifier and the system frame information. According to the foregoing method, a system frame number used by the radio equipment is consistent with the system frame number used by the radio equipment control, to ensure that the radio equipment can successfully parse a data packet from the radio equipment control, avoid service interruption, and improve reliability of a communication system.

The foregoing mainly describes the solutions provided in embodiments of this application from the perspective of interaction between the radio equipment control and the radio equipment. It may be understood that, to implement the foregoing functions, the foregoing radio equipment control and radio equipment include corresponding hardware structures and/or software modules for performing the functions. A person of ordinary skill in the art should easily be aware that, in combination with the modules and the algorithm steps in the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In terms of a hardware structure, the radio equipment and the radio equipment control in FIG. 1a to FIG. 3 may be implemented by one physical device, or may be jointly implemented by a plurality of physical devices, or may be a logical functional module in one physical device. This is not specifically limited in embodiments of this application.

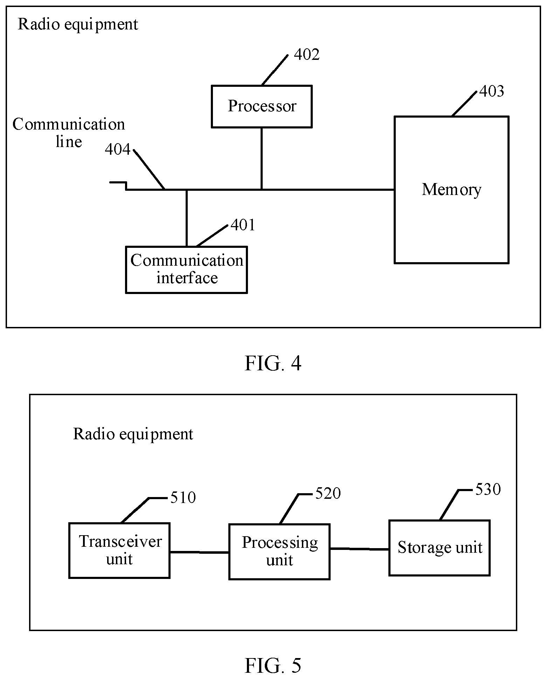

For example, the radio equipment may be implemented by using a communication device in FIG. 4. FIG. 4 is a schematic diagram of a hardware structure of radio equipment according to an embodiment of this application. The radio equipment includes a communication interface 401 and a processor 402, and may further include a memory 403.

The communication interface 401 may use any apparatus such as a transceiver, and is configured to communicate with another device or a communication network, for example, an Ethernet.

The processor 402 includes but is not limited to one or more of the following: a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. The processor 402 is responsible for a communication line 404 and general processing, and may further provide various functions, including timing, peripheral interfacing, voltage regulation, power management, and another control function. The memory 403 may be configured to store data used by the processor 402 to perform an operation.

The memory 403 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically Erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used for carrying or storing expected program code in a form of an instruction or a data structure and that can be accessed by a computer. However, the memory 403 is not limited thereto. The memory may exist independently, and is connected to the processor 402 through the communication line 404. Alternatively, the memory 403 may be integrated with the processor 402. If the memory 403 and the processor 402 are mutually independent components, the memory 403 is connected to the processor 402. For example, the memory 403 and the processor 402 may communicate with each other through the communication line. The communication interface 401 and the processor 402 may communicate with each other through the communication line, or the communication interface 401 may be directly connected to the processor 402.

The communication line 404 may include any quantity of interconnected buses and bridges, and the communication line 404 links various circuits of one or more processors 402 represented by the processor 402 and a memory represented by the memory 403. The communication line 404 may further link various other circuits such as a peripheral device, a voltage stabilizer, and a power management circuit. These are well known in the art, and therefore are not further described in this application.

In embodiments of this application, the communication interface may be considered as a transceiver unit of the radio equipment, the processor that has a processing function may be considered as a processing unit of the radio equipment, and the memory may be considered as a storage unit of the radio equipment. As shown in FIG. 5, radio equipment includes a transceiver unit 510, a processing unit 520, and a storage unit 530. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 510 and that is configured to implement a receiving function may be considered as a receiving unit, and a component that is in the transceiver unit 510 and that is configured to implement a sending function may be considered as a sending unit. That is, the transceiver unit 510 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmit circuit, or the like.

In a specific implementation, the transceiver unit 510 is configured to perform receiving and sending operations on the radio equipment in steps 202 and 204 in FIG. 2, and/or the transceiver unit 510 is further configured to perform other receiving and sending steps on the radio equipment in the embodiment corresponding to FIG. 3. The processing unit 520 is configured to perform steps 203, 205, and 206 in FIG. 2, and/or the processing unit 520 is further configured to perform other processing steps of the radio equipment in the embodiment corresponding to FIG. 3.

In a possible implementation,
the transceiver unit 510 is configured to receive a control plane message from radio equipment control, where the control plane message carries system frame information, and the system frame information indicates a system frame number; and
the processing unit 520 is configured to adjust a local system frame number based on the system frame information.

In a possible implementation, the system frame information further includes a system hyper frame number or a symbol number; and
the processing unit 520 is further configured to adjust a local system hyper frame number, system subframe number, slot number, and/or symbol number based on the system frame information.

In a possible implementation, the transceiver unit 510 is specifically configured to receive, from the radio equipment control, N control plane messages that carry the system frame information, where N is an integer greater than 1;
the processing unit 520 is specifically configured to determine N to-be-adjusted system frame number differences based on the system frame information carried in the N control plane messages and the local system frame number of the radio equipment; and
the processing unit 520 is specifically configured to: when variations of adjacent system frame number differences in the N to-be-adjusted system frame number differences are consistent, the processing unit 520 adjusts the local system frame number based on the N to-be-adjusted system frame number differences.

In a possible implementation, a sending priority of the control plane message carrying the system frame information is higher than that of a user plane packet.

In a possible implementation, the sending priority of the control plane message carrying the system frame information is higher than that of another control plane message.

In a possible implementation, the processing unit 520 is specifically configured to periodically receive the control plane message from the radio equipment control.

In a possible implementation,
the transceiver unit 510 is configured to receive a user plane packet from radio equipment control, where the user plane packet carries system frame information and a synchronization identifier, and the system frame information indicates a system frame number; and
the processing unit 520 is configured to adjust a local system frame number based on the synchronization identifier and the system frame information.

In a possible implementation, the system frame information further includes one or more of the following: a system hyper frame number, a system subframe number, a slot number, and/or a symbol number, and the processing unit 520 is further configured to adjust a local system hyper frame number, system subframe number, slot number, and/or symbol number based on the system frame information.

In a possible implementation, the processing unit 520 is further configured to detect whether the system frame information carried in the user plane packet is located in a receive window of the radio equipment.

In a possible implementation, the processing unit 520 is further configured to adjust the receive window of the radio equipment based on an adjusted local system frame number;
the processing unit 520 is further configured to detect whether the user plane packet is located in an adjusted receive window of the radio equipment;
the processing unit 520 is further configured to: if yes, process the user plane packet; and
the processing unit 520 is further configured to: if not, discard the user plane packet.

In a possible implementation, the transceiver unit 510 is further configured to periodically receive the user plane packet that is from the radio equipment control and that carries the synchronization identifier.

In a possible implementation, the transceiver unit 510 is further configured to receive N user plane packets that are from the radio equipment control and that include the synchronization identifier, where N is an integer greater than 1;
the processing unit 520 is further configured to determine N to-be-adjusted system frame number differences based on the system frame information carried in the N user plane packets that include the synchronization identifier and the local system frame number of the radio equipment; and
the processing unit 520 is further configured to: when variations of adjacent system frame number differences in the N to-be-adjusted system frame number differences are consistent, adjust the local system frame number based on the N to-be-adjusted system frame number differences.

In a possible implementation, the system frame information is located in a packet header of the user plane packet.

In a possible implementation, the synchronization identifier is located in the packet header of the user plane packet.

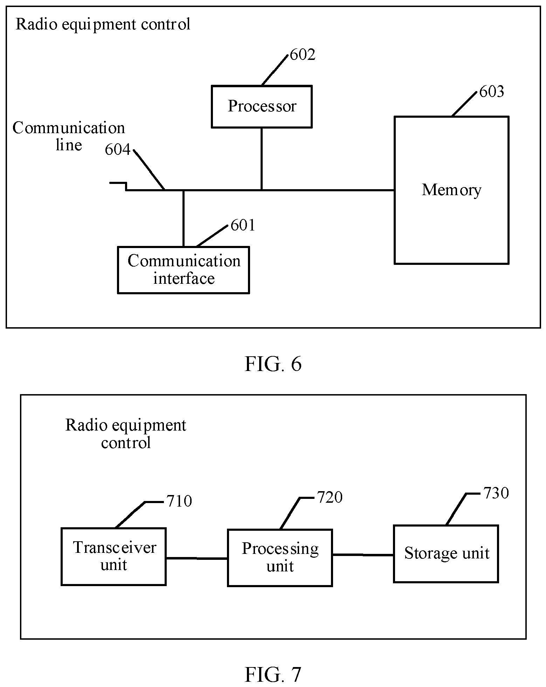

In addition, the radio equipment control may be implemented by using a communication device in FIG. 6. FIG. 6 is a schematic diagram of a hardware structure of radio equipment control according to an embodiment of this application. The radio equipment control includes a communication interface 601 and a processor 602, and may further include a memory 603.

The communication interface 601 may use any apparatus such as a transceiver, and is configured to communicate with another device or a communication network.

The processor 602 includes but is not limited to one or more of the following: a central processing unit (central processing unit, CPU), a network processor (network processor, NP), an application-specific integrated circuit (application-specific integrated circuit, ASIC), or a programmable logic device (programmable logic device, PLD). The PLD may be a complex programmable logic device (complex programmable logic device, CPLD), a field-programmable gate array (field-programmable gate array, FPGA), generic array logic (generic array logic, GAL), or any combination thereof. The processor 602 is responsible for a communication line 604 and general processing, and may further provide various functions, including timing, peripheral interfacing, voltage regulation, power management, and another control function. The memory 603 may be configured to store data used by the processor 602 to perform an operation.

The memory 603 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically Erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium that can be used for carrying or storing expected program code in a form of an instruction or a data structure and that can be accessed by a computer. However, the memory 603 is not limited thereto. The memory may exist independently, and is connected to the processor 602 through the communication line 604. Alternatively, the memory 603 may be integrated with the processor 602. If the memory 603 and the processor 602 are mutually independent components, the memory 603 is connected to the processor 602. For example, the memory 603 and the processor 602 may communicate with each other through the communication line. The communication interface 601 and the processor 602 may communicate with each other through the communication line, or the communication interface 601 may be directly connected to the processor 602.

The communication line 604 may include any quantity of interconnected buses and bridges, and the communication line 604 links various circuits of one or more processors 602 represented by the processor 602 and a memory represented by the memory 603. The communication line 604 may further link various other circuits such as a peripheral device, a voltage stabilizer, and a power management circuit. These are well known in the art, and therefore are not further described in this application.

In embodiments of this application, the communication interface may be considered as a transceiver unit of the radio equipment control, the processor that has a processing function may be considered as a processing unit of the radio equipment control, and the memory may be considered as a storage unit of the radio equipment control. As shown in FIG. 7, radio equipment control includes a transceiver unit 710, a processing unit 720, and a storage unit 730. The transceiver unit may also be referred to as a transceiver, a transceiver machine, a transceiver apparatus, or the like. The processing unit may also be referred to as a processor, a processing board, a processing module, a processing apparatus, or the like. Optionally, a component that is in the transceiver unit 710 and that is configured to implement a receiving function may be considered as a receiving unit, and a component that is in the transceiver unit 710 and that is configured to implement a sending function may be considered as a sending unit. That is, the transceiver unit 710 includes the receiving unit and the sending unit. The transceiver unit sometimes may also be referred to as a transceiver machine, a transceiver, a transceiver circuit, or the like. The receiving unit sometimes may also be referred to as a receiver machine, a receiver, a receiver circuit, or the like. The sending unit sometimes may also be referred to as a transmitter machine, a transmitter, a transmit circuit, or the like.

In a specific implementation, the transceiver unit 710 is configured to perform receiving and sending operations on the radio equipment control in steps 202 and 204 in FIG. 2, and/or the transceiver unit 710 is further configured to perform other receiving and sending steps on the radio equipment control in the embodiment corresponding to FIG. 3. The processing unit 720 is configured to perform step 201 in FIG. 2, and/or the processing unit 720 is further configured to perform other processing steps of the radio equipment control in the embodiment corresponding to FIG. 3.

In a possible implementation,
the processing unit 720 is configured to generate system frame information, where the system frame information indicates a system frame number; and
the transceiver unit 710 is configured to send the system frame information to radio equipment by using a control plane message.

In a possible implementation, the system frame information further includes a system hyper frame number, a system subframe number, a slot number, and/or a symbol number.

In a possible implementation, a sending priority of the control plane message carrying the system frame information is higher than that of a user plane packet.

In a possible implementation, the sending priority of the control plane message carrying the system frame information is higher than that of another control plane message.

In a possible implementation, the transceiver unit 710 is specifically configured to periodically send the system frame information to the radio equipment by using the control plane message.

In a possible implementation, the processing unit 720 is configured to generate a user plane packet, where the user plane packet carries system frame information and a synchronization identifier, the system frame information indicates a system frame number, and the synchronization identifier indicates radio equipment to adjust a local system frame number based on the system frame information included in the user plane packet; and
the transceiver unit 710 is configured to send the user plane packet to the radio equipment.

In a possible implementation, the system frame information further includes a system hyper frame number, a system subframe number, a slot number, and/or a symbol number.

In a possible implementation, the system frame information is located in a packet header of the user plane packet.

In a possible implementation, the synchronization identifier is located in the packet header of the user plane packet.

In a possible implementation, the transceiver unit 710 is specifically configured to periodically send, to the radio equipment, the user plane packet carrying the synchronization identifier.

An embodiment of this application further provides a computer-readable storage medium, including instructions. When the instructions are run on a computer, the computer is enabled to control a station to perform any implementation shown in the foregoing method embodiment.

An embodiment of this application further provides a computer program product. The computer program product includes computer program code. When the computer program code is run on a computer, the computer performs any implementation shown in the foregoing method embodiments.

Further, an embodiment of this application further provides a computer program product. When the computer program product runs on a computer device or a station, the computer device or the station is enabled to perform any implementation shown in the foregoing method embodiments.

An embodiment of this application further provides a chip system, including a processor and an interface circuit. The interface circuit is configured to receive instructions and transmit the instructions to the processor. The processor is configured to implement the method in any one of the foregoing method embodiments.

Optionally, the chip system further includes a memory, and there may be one or more processors in the chip system. The processor may be implemented by hardware, or may be implemented by software. When the processor is implemented by using the hardware, the processor may be a logic circuit, an integrated circuit, or the like. When the processor is implemented through the software, the processor may be a general-purpose processor, and the method in any one of the foregoing method embodiments is implemented by reading software code stored in the memory.

Optionally, there may also be one or more memories in the chip system. The memory may be integrated with the processor, or may be disposed separately from the processor. This is not limited in this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in this application.

The foregoing describes embodiments of this application in detail. Steps in the methods in embodiments of this application may be sequentially scheduled, combined, or deleted according to an actual requirement. Modules in the apparatus in embodiments of this application may be divided, combined, or deleted according to an actual requirement.

It should be understood that "one embodiment" or "an embodiment" mentioned in the entire specification means that particular features, structures, or characteristics related to the embodiment are included in at least one embodiment of this application. Therefore, "in one embodiment" or "in an embodiment" appearing throughout the specification does not necessarily refer to a same embodiment. In addition, these particular features, structures, or characteristics may be combined in one or more embodiments by using any appropriate manner. It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

It should be understood that in embodiments of this application, "B corresponding to A" indicates that B is associated with A, and B may be determined according to A. However, it should be further understood that determining B based on A does not mean that B is determined based only on A. B may alternatively be determined based on A and/or other information.

It can be clearly understood by a person skilled in the art that, for a purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions in embodiments.

In addition, functional units in embodiments of this application may be integrated into one processing unit, each of the units may exist independently physically, or two or more units may be integrated into one unit. The integrated unit may be implemented in a form of hardware, or may be implemented in a form of a software functional unit.

## Claims

1. A system frame number synchronization method, comprising:
generating, by radio equipment control, system frame information, wherein the system frame information indicates a system frame number; and
sending, by the radio equipment control, the system frame information to radio equipment by using a control plane message.

2. The method according to claim 1, wherein the system frame information further comprises a system hyper frame number, a system subframe number, a slot number, and/or a symbol number.

3. The method according to claim 1 or 2, wherein
a sending priority of the control plane message carrying the system frame information is higher than that of a user plane packet.

4. The method according to any one of claims 1 to 3, wherein
the sending priority of the control plane message carrying the system frame information is higher than that of another control plane message.

5. The method according to any one of claims 1 to 4, wherein the sending, by the radio equipment control, the system frame information to radio equipment by using a control plane message comprises:
periodically sending, by the radio equipment control, the system frame information to the radio equipment by using the control plane message.

6. The method according to any one of claims 1 to 5, wherein the sending, by the radio equipment control, the system frame information to radio equipment by using a control plane message comprises:
sending, by the radio equipment, the control plane message to the radio equipment control through an enhanced common public radio interface eCPRI, wherein the control plane message carries the system frame information.

7. A system frame number synchronization method, comprising:
receiving, by radio equipment, a control plane message from radio equipment control, wherein the control plane message carries system frame information, and the system frame information indicates a system frame number; and
adjusting, by the radio equipment, a local system frame number based on the system frame information.

8. The method according to claim 7, wherein the system frame information further comprises a system hyper frame number, a system subframe number, a slot number, and/or a symbol number, and the method further comprises:
adjusting, by the radio equipment, a local system hyper frame number, system subframe number, slot number, and/or symbol number based on the system frame information.

9. The method according to claim 7 or 8, wherein
the receiving, by radio equipment, a control plane message from radio equipment control comprises:
receiving, by the radio equipment from the radio equipment control, N control plane messages that carry the system frame information, wherein N is an integer greater than 1; and
the adjusting, by the radio equipment, a local system frame number based on the system frame information comprises:
determining, by the radio equipment, N to-be-adjusted system frame number differences based on the system frame information carried in the N control plane messages and the local system frame number of the radio equipment; and
when variations of adjacent system frame number differences in the N to-be-adjusted system frame number differences are consistent, adjusting, by the radio equipment, the local system frame number based on the N to-be-adjusted system frame number differences.

10. The method according to any one of claims 7 to 9, wherein
a sending priority of the control plane message carrying the system frame information is higher than that of a user plane packet.

11. The method according to any one of claims 7 to 10, wherein
the sending priority of the control plane message carrying the system frame information is higher than that of another control plane message.

12. The method according to any one of claims 7 to 11, wherein the sending, by the radio equipment control, the system frame information to the radio equipment by using the control plane message comprises:
periodically receiving, by the radio equipment, the control plane message from the radio equipment control.

13. The method according to any one of claims 7 to 12, wherein the receiving, by radio equipment, a control plane message from radio equipment control comprises:
receiving, by the radio equipment, the control plane message from the radio equipment control through an enhanced common public radio interface eCPRI.

14. A system frame number synchronization method, comprising:
generating, by radio equipment control, a user plane packet, wherein the user plane packet carries system frame information and a synchronization identifier, the system frame information indicates a system frame number, and the synchronization identifier indicates radio equipment to adjust a local system frame number based on the system frame information comprised in the user plane packet; and
sending, by the radio equipment control, the user plane packet to the radio equipment.

15. The method according to claim 14, wherein the system frame information further comprises a system hyper frame number, a system subframe number, a slot number, and/or a symbol number.

16. The method according to claim 14 or 15, wherein the system frame information is located in a packet header of the user plane packet.

17. The method according to any one of claims 14 to 16, wherein the synchronization identifier is located in the packet header of the user plane packet.

18. The method according to any one of claims 14 to 17, wherein the sending, by the radio equipment control, the user plane packet to the radio equipment comprises:
periodically sending, by the radio equipment control to the radio equipment, the user plane packet carrying the synchronization identifier.

19. The method according to any one of claims 14 to 18, wherein the sending, by the radio equipment control, the user plane packet to the radio equipment comprises:
sending, by the radio equipment control, the user plane packet to the radio equipment through an enhanced common public radio interface eCPRI.

20. A system frame number synchronization method, comprising:
receiving, by radio equipment, a user plane packet from radio equipment control, wherein the user plane packet carries system frame information and a synchronization identifier, and the system frame information indicates a system frame number; and
adjusting, by the radio equipment, a local system frame number based on the synchronization identifier and the system frame information.

21. The method according to claim 20, wherein the system frame information further comprises one or more of the following: a system hyper frame number, a system subframe number, a slot number, and/or a symbol number, and the method further comprises:
adjusting, by the radio equipment, a local system hyper frame number, system subframe number, slot number, and/or symbol number based on the system frame information.

22. The method according to claim 20 or 21, wherein after the adjusting, by the radio equipment, a local system frame number based on the synchronization identifier and the system frame information, the method further comprises:
adjusting, by the radio equipment, a receive window of the radio equipment based on an adjusted local system frame number; and
detecting, by the radio equipment, whether the user plane packet is located in an adjusted receive window of the radio equipment; and
if yes, processing, by the radio equipment, the user plane packet; or
if not, discarding, by the radio equipment, the user plane packet.

23. The method according to any one of claims 20 to 22, wherein the radio equipment periodically receives, from the radio equipment control, the user plane packet carrying the synchronization identifier.

24. The method according to any one of claims 20 to 23, wherein
the receiving, by radio equipment, a user plane packet from radio equipment control comprises:
receiving, by the radio equipment, N user plane packets that are from the radio equipment control and that comprise the synchronization identifier, wherein N is an integer greater than 1; and
the adjusting, by the radio equipment, a local system frame number based on the system frame information comprises:
determining, by the radio equipment, N to-be-adjusted system frame number differences based on the system frame information carried in the N user plane packets that comprise the synchronization identifier and the local system frame number of the radio equipment; and
when variations of adjacent system frame number differences in the N to-be-adjusted system frame number differences are consistent, adjusting, by the radio equipment, the local system frame number based on the N to-be-adjusted system frame number differences.

25. The method according to any one of claims 20 to 24, wherein the system frame information is located in a packet header of the user plane packet.

26. The method according to any one of claims 20 to 25, wherein the synchronization identifier is located in the packet header of the user plane packet.

27. The method according to any one of claims 20 to 26, wherein the receiving, by radio equipment, a user plane packet from radio equipment control comprises:
receiving, by the radio equipment, the user plane packet from the radio equipment control through an enhanced common public radio interface eCPRI.

28. A communication device, used as radio equipment control and comprising:
a memory, wherein the memory stores instructions; and
a processor, configured to execute the instructions, to enable the radio equipment control to perform the method according to any one of claims 1 to 6, or perform the method according to any one of claims 14 to 19.

29. A communication device, used as radio equipment and comprising:
a memory, wherein the memory stores instructions; and
a processor, configured to execute the instructions, to enable the radio equipment control to perform the method according to any one of claims 7 to 13, or perform the method according to any one of claims 20 to 27.

30. A computer-readable storage medium, comprising instructions, wherein when the instructions are executed by a processor, the method according to any one of claims 1 to 27 is implemented.

31. A computer program product, comprising a program, wherein when the program is executed by a processor, the method according to any one of claims 1 to 27 is implemented.

32. A communication system, wherein the communication system comprises the communication device according to claim 28 and the communication device according to claim 29.
